# EUROPÄISCHE PATENTANMELDUNG

(11) **EP 2 249 036 A1**
(43) Veröffentlichungstag der Anmeldung: **10.11.2010**
(21) Anmeldenummer: 10405085.1
(22) Anmeldetag: 22.04.2010
(51) Int. Cl.: F04B 39/10, F16K 15/08

(54) **Ringventil**

(30) Priorität: 28.04.2009 CH 6652009
(71) Anmelder: ML Tech GmbH, 8477 Oberstammheim (CH)
(72) Erfinder: Lehmann, Markus, 8477 Oberstammheim (CH)
(74) Vertreter: Frei Patent Attorneys

(57) **Zusammenfassung**

Die Erfindung betrifft ein Ringventil mit einem Ventilsitz (33) und einem Ventilfänger (32) und ein zwischen Ventilsitz und Ventilfänger befindlichem Ventilelement. Das Ventilelement weist ein Dichtungselement mit mindestens einer konzentrisch angeordneten Nut und eine Lenkerplatte (16) mit mindestens einem aus der Ebene der Lenkerplatte ausgebogenen Federarm (17) auf. Der mindestens eine Federarm wirkt mit der konzentrisch angeordneten Nut zusammen, indem ein äusseres Ende des Federarms in die Nut des Dichtungselements eingreift.

## Beschreibung

Die Erfindung betrifft ein Ringventil, insbesondere ein Ringventil zur Verwendung in einem Verdichter oder Kompressor.

Ringventile für Verdichter und Kolbenkompressoren sind seit langem bekannt, auch solche welche Dichtringe oder -platten aus Kunststoff verwenden. Um Dichtringe in Position zu halten sind seitliche Führungen notwendig, welche jedoch zu Reibung und entsprechendem Verschleiss führt.

Aus EP 0 572 748 sind Ringventile bekannt, in welchem eine reibungsfreie Führung einer Kunststoffdichtplatte mittels Druckfedern beschrieben ist. Dabei sind die zylindrischen Spiralfedern direkt über Ausbuchtungen oder Einformungen in der Dichtplatte geführt. Um Ventile strömungsmässig zu verbessern, ist es jedoch notwendig die Ringbreiten zu verkleinern. Es ist deshalb nicht mehr genügend Platz vorhanden um die Federn inkl. ihrer Führung unterzubringen.

Reibung in einem Ventil ist auch deshalb kritisch, da immer mehr auf verunreinigendes und wartungsaufwendiges Verwenden von Schmiermittel in Ventilen verzichtet werden soll. Reibungsflächen ohne Schmiermittel weisen jedoch den erwähnten Materialverschleiss auf.

Es wurden in den letzen Jahren einige Verbesserungen für Ringventile vorgeschlagen, was Reibung, Materialverschleiss und Herstellung anbelangt. Beispielsweise in EP 1 939 450 wird zur verbesserten Nachbearbeitung des Ventilsitzes vorgeschlagen die Dichtflächen vorstehend zu gestalten. Eine Führung der Dichtringe geschieht jedoch über vorstehende Nocken, was einerseits weiterhin eine reibende Führung der Dichtringe beinhaltet und andererseits eine Nachbearbeitung des Ventilsitzes sehr aufwändig macht.

Um einen gegenseitigen Verschleiss von Dichtringen und Synchronplatte aus Kunststoff zu verbessern bzw. zu verhindern, wird in EP 1 939 451 vorgeschlagen, eine metallische Trennplatte zwischen Dichtringen und Synchronplatte anzuordnen. Die Synchronplatte übernimmt dabei die Funktion der Synchronisation und Dämpfung der Ringöffnungsbewegung. Die Synchronplatte selber ist wiederum am inneren Distanzring reibend geführt. Zur Ringführung werden zudem Teile der Trennplatte seitlich abgebogen und ragen senkrecht als Laschen in den Strömungskanal des Ventils hinein. Sie erhöhen damit den Ventilverlust und die Gefahr einer Verstopfung des Ventils.

Hinzu kommt, dass der gesamte Verband von Dichtringen, Trennplatte und Synchronplatte sehr schwer ist und dies zu zusätzlichen Verlusten im Betrieb des Ventils führt. Bei einem Öffnungsvorgang prallt der gesamte Verband mit grosser Wucht auf den Ventilfänger, da ausser den Druckfedern keine Dämpfungselemente vorhanden sind.

Aufgabe der Erfindung ist es somit ein Ringventil zu schaffen, mit welchem eine reibungsfreie Führung des Dichtungselements möglich ist. Insbesondere soll ein Ringventil geschaffen werden, welches reibungsfrei geführt und gedämpft wird. Diese Aufgabe wird durch das Ringventil und das Verfahren gelöst wie sie in den unabhängigen Patentansprüchen beschrieben sind.

Das Ringventil weist einen Ventilsitz und einen Ventilfänger und ein zwischen Ventilsitz und Ventilfänger befindliches Ventilelement auf. Das Ventilelement umfasst ein Dichtungselement, beispielsweise einen oder mehrere Dichtungsringe oder eine Dichtungsplatte, wobei im Dichtungselement mindestens eine bezüglich des Ventils konzentrisch angeordneten Nut eingebracht ist. Des weiteren weist das Ventilelement eine Lenkerplatte mit mindestens einem aus der Ebene der Lenkerplatte ausgebogenen Federarm auf. Dieser mindestens eine Federarm wirkt mit der konzentrisch angeordneten Nut zusammen, in dem er vorzugsweise während eines gesamten Hubes der Ventils in die Nut des Dichtungselements eingreift.

Das Dichtungselement ist über den in die Nut eingreifende Federarm reibungsfrei geführt. Zusätzlich dazu übernimmt der Federarm eine Dämpfung des bewegten Dichtungselements. Es ist somit möglich ein Ringventil herzustellen, bei welchem das Dichtelement bei einer Hubbewegung des Ventils axial reibungsfrei geführt wird und das Ventil gleichzeitig mit denselben Mitteln durch eine im mindestens einen Federarm gespeicherte Federkraft in Hubrichtung gedämpft wird. Damit können Herstellungskosten, sowie mehrfach Materialverschleiss und -abnutzung verringert oder teilweise gar verhindert werden.

Die Lenkerplatte weist vorzugsweise mehrere radial und in Umfangsrichtung konzentrisch angeordnete, ausgebogene Federarme auf. Ein äusseres Ende der Federarme kann dabei als Führungszunge ausgebildet sein, so dass lediglich die Führungszunge in eine Nut eingreift. Die Führungszunge ist vorzugsweise schmaler als der eigentliche Federarm und kann stärker ausgebogen sein. Die Federarme sind dabei axial elastisch, radial jedoch unnachgiebig zur radialen Führung des Dichtelements. Eine Ausbiegung eines Federarms, gegebenenfalls inklusive Führungszunge, entspricht vorzugsweise genau einer Hubhöhe des Ventils, derart, dass der Federarm auch bei vollständig geöffnetem Ventil zumindest minimal in eine Nut eingreift. Die Lenkerplatte ist in ihrem innersten Bereich bevorzugt vollständig fixiert gegenüber axialen und radialen Bewegungen.

Das Dichtungselement besteht korrespondierend zur Lenkerplatte vorzugsweise aus mehreren konzentrischen Dichtringen, in welchen eine oder mehrere Nuten darin eingebracht sind. Wird anstelle von einzelnen Dichtringen eine Dichtungsplatte verwendet, so weist diese mehrere in radialer und Umfangsrichtung konzentrisch angeordnete Durchgangsöffnungen als Eingangsöffnungen für Gas oder Flüssigkeiten und entsprechende Nuten auf.

Die Nuten im Dichtungselement können umlaufend, partielle Kreisabschnitte, oder im wesentlichen auch als längliche Aussparung gestaltet sein.

In einer bevorzugten Ausführungsform der Lenkerplatte sind ausgebogene Federarme nur in einem äusseren Bereich der Lenkerplatte angeordnet. Der innere Bereich der Lenkerplatte wird durch eine innere nicht ausgebogene Lenkerfeder gebildet. Diese wird bevorzugt im innersten zentralen Bereich fixiert, beispielsweise an ein oder zwischen zwei Distanzelementen geklemmt, und dient so einer elastischen axialen Lenkung der Lenkerplatte. Aufgrund einer inneren axialen Fixierung der Lenkerplatte entsteht somit keine Reibung, wie dies beispielsweise bei Synchronplatten aus den bekannten Ventilen der Fall ist.

Solche inneren Lenkerfedern sind typischerweise durch eine spiralförmige Aussparung um eine mittige Zentralöffnung des Ventils herum gebildet und sind an sich aus dem Metallplattenventilbau bekannt.

Zwischen der Lenkerplatte und dem Fänger sind mehrere zylindrische Druckfedern angeordnet, mit welcher die Lenkerplatte an das Ventilelement gepresst und das Ventil dadurch geschlossen wird. Diese Druckfedern wirken ebenfalls als Dämpfung des Ventil. Zur weiteren Dämpfung kann eine Dämpfungsplatte zwischen Lenkerplatte und Fänger vorgesehen werden. Eine solche Dämpfungsplatte ist bevorzugt mit dem Fänger fest verbunden. Es ist somit möglich auf relativ einfache Weise nebst einer reibungsfreien Führung auch eine Mehrfachdämpfung eines Ventils zu erreichen.

In einer bevorzugten Ausführungsform wird das Ventilelement, also der bewegliche Teil eines Ringventils, lediglich durch die Lenkerplatte und das Dichtungselement gebildet. Das Ventilelement kann somit sehr einfach und leicht gestaltet sein, was zusätzlich das Ventil schont, in dem keine massiven Plattenverbände mit hoher Wucht auf einen Fänger prallen. Auch dadurch können zusätzliche Herstellungs-, und Unterhaltskosten eingespart werden.

Des weiteren sind aufgrund der speziellen Gestaltung und dem Zusammenspiel von Dichtelement und Lenkerplatte mit Federarmen keinerlei Vorsprünge oder Ausformungen vorhanden, welche in einen Strömungskanal des Ventils ragen und damit den Betrieb des Ventil beeinträchtigen.

Ohne solche Vorsprünge, insbesondere des Ventilsitzes, ist dieser sehr einfach nachbearbeitbar und die anderen Ventilelemente entsprechend einfach und günstig herstellbar.

Durch eine Führung des Dichtungselements über eine Lenkerplatte und eine Fixierung der Lenkerplatte über eine innere Lenkerfeder kann auf zusätzliche Verdrehsicherungen, wie beispielsweise Verdrehsicherungsstifte verzichtet werden.

Aus GB319498 ist ein Plattenventil bekannt, bei welchem die Führung ähnlich zu der der vorliegenden Erfindung ist. Jedoch ragen die Führungen in einen Strömungskanal ein. Infolge eines Strömungsangriffs an dieser Führung können dieser aufgebogen werden und die Platte herausfallen. Zudem muss der Federarm immer mit der Zylinderfeder gegen die Platte gedrückt werden, damit die Führung gewährleistet ist. Damit ist jedoch keine Massendämpfung wie in der vorliegenden Erfindung möglich.

In US 1,433,094 und US 1,425,613 sind Teile des Ventils miteinander vernietet, was bei Ventilen mit Kunststoffteilen nicht möglich ist. In der erstgenannten Schrift sind die Führungen mit der Platte vernietet und erlauben deshalb keine Massendämpfung. Zudem sind die Nieten zugleich Aufnahmen für die Federn und können somit nicht beliebig angeordnet werden. Im Gegensatz dazu können im erfindungsgemässen Ringventil die Federn im wesentlichen beliebig auf den Stegen angeordnet werden. In der zweitgenannten Schrift ist die Ventilplatte mit der Federplatte vernietet. Auch hier gibt es keine Massendämpfung. Prinzipiell werden in diesen Ventilen einfach zylindrische Druckfedern durch Plattenfedern ersetzt.

In GB 251,472 offenbart eine separate Platte mit angenieteten Federarmen. Solche angenieteten Federarme sind stark bruchgefährdet und für stark beanspruchte Ventile nicht geeignet. Auch sind die Federarme nur als Federn ausgebildet und bilden keine reibungsfreien Führungselemente der Platten bzw. der Ringe wie in der vorliegenden Erfindung. Das Verschlusselement wird immer reibend geführt. Zudem wird eine ,hydraulische' Dämpfung der Platten bzw. der Ringe beschrieben. Solche Dämpfungen sind äusserst störungsanfällig, aufgrund Verstopfung der engen Spalten

Beispielhafte Ausführungsformen des erfindungsgemässen Ringventils und Details davon sind in den folgenden Figuren schematisch dargestellt und beschrieben. Dabei zeigt:
Fig. 1 ein Ringventil gemäss dem Stand der Technik;
Fig. 2 eine Lenkerplatte;
Fig. 3 Ventilringe mit Ausschnitt Lenkerplatte;
Fig. 4 eine schematische Darstellung eines Ventils;
Fig. 5a und 5b Nutformen.

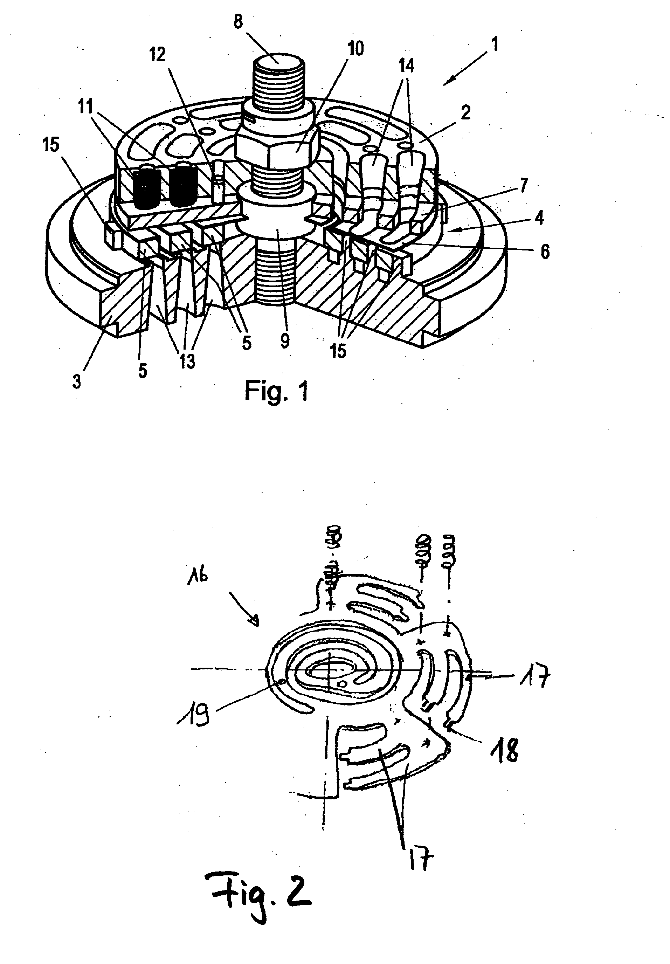

In **Figur 1** ist ein bekannter Aufbau eines Ringventils 1 gezeigt. Ein Ringventil, beispielsweise für einen Verdichter oder Kompressor, besteht aus einem Ventilsitz 3 und einem Ventilfänger 2. Dazwischen ist ein Ventilelement 4 angeordnet, das zwischen Ventilsitz und Ventilfänger hin- und herbewegt wird und im Zusammenwirken mit dem Ventilsitz die Dichtungsfunktion übernimmt, indem der Strömungsquerschnitt im Ventil verschlossen oder freigegeben wird. Im Ventilsitz und -fänger sind entsprechende Durchgangskanäle 13 angeordnet. Die ringförmigen Kanäle sind Kreisringabschnitte, welche durch Radialstege unterbrochen werden. Die einzelnen Teile des Ventils werden in der Regel über einen durchgehenden Bolzen 8 und eine Mutter 10 zusammengehalten.

Das Ventilelement umfasst konzentrisch angeordnete Dichtringe 5, die mit dem Ventilsitz 3 entlang korrespondierender Dichtflächen 17 zusammenwirken. Diese Ringe können auch als zusammenhängende Ventilplatte ausgestaltet sein. Zur axialen und radialen Führung der Dichtringe sind über den Umfang des Ventilsitzes verteilt und in unterschiedlichen Abständen abstehende Nocken 15 oder Ringführungsvorsprünge angeordnet. Zur reinen Verdrehsicherung der Ventilelemente wird typischerweise ein einzelner Verdrehstift 12 verwendet, welcher vom Fänger bzw. vom Ventilsitz durchs Ventilelement reicht.

Das vorliegende Ringventil weist eine Synchronplatte 7 und eine zwischen Synchronplatte und Dichtringen angeordnete metallische Trennplatte 6 auf. Die Synchronplatte wird durch mehrere teilweise im Fänger eingebrachte Druckfedern federbelastet. Die Spiralfedern 11 drücken die Dichtringe über die Synchronplatte gegen den Ventilsitz. Während einer Ventilöffnungsbewegung werden die Dichtringe durch einen anstehenden Druck eines Mediums, z.B. Gas oder Flüssigkeit, entgegen der Kraft der Federn von Ventilsitz abgehoben. Hier bilden die Synchronplatte, die Trennpatte und die Dichtringe das Ventilelement des Ringventils 1. Diese Elemente liege lose aneinander und werden gemeinsam bewegt.

Der mögliche Ventilhub wird durch den Abstand zwischen Ventilsitz und Ventilfänger gegeben und durch eine Distanzscheibe 9 oder gegebenenfalls durch einen Vorsprung im Fänger realisiert.

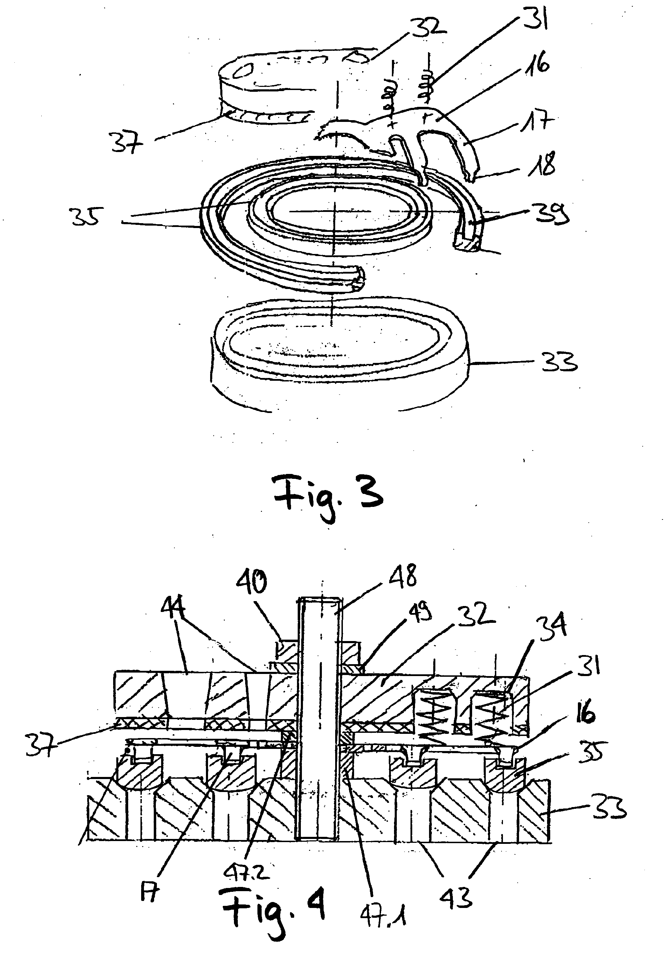

In **Figur 2** ist eine erfindungsgemässe Lenkerplatte 16 gezeigt, welche zur Führung und Dämpfung eines Ringventils verwendet wird. Die Lenkerplatte weist eine zentrale Öffnung für die Durchführung einer Zentralschraube auf. Des weiteren weist sie mehrere äussere Federarme 17 auf, welche vorzugsweise regelmässig über den Umfang verteilt angeordnet sind. In dieser Figur sind radial benachbarte Federarme auf zwei konzentrischen Kreisen angeordnet. Die Federarme weisen an ihren Enden Führungszungen 18 auf und sind aus der Ebene der Lenkerplatte heraus gebogene Federarme, besser zu sehen in Figur 3. Die Führungszungen sind vorzugsweise schmalere, eventuell auch dünnere Bereiche des Federarms, welche vorzugsweise stärker ausgebogen sind als der restliche Federarm. Reicht lediglich die Federzunge in eine korrespondierende Nut ein, so kann diese entsprechend schmal gestaltet werden.

Die Lenkerplatte weist ein weiteres Federelement, eine innere Lenkerfeder 19, auf. Diese ist als eine spiralförmiger Aussparung, z.B. Ausfräsung, um die zentrale Öffnung herum gebildet.

Die innere Lenkerfeder übernimmt dabei eine axiale Lenkung der Lenkerplatte, in dem eine Lenkerplatte über die Lenkerfeder im Zentrum axial fixiert angebracht ist, jedoch über die Feder axial ausgelenkt werden kann. Dadurch, dass die Lenkerplatte im Zentralbereich keinen Hub mitmacht, entsteht in diesem Bereich keine Reibung.

Die Abstände der Federarme entsprechend den Abständen in korrespondierenden Nuten in Dichtringen bzw. in einer Dichtungsplatte.

In **Figur 3** ist der besseren Übersicht halber ein Ringventil nur sehr schematisch und gewisse Bestandteile nur ansatzweise gezeigt. Zwischen Ventilsitz 33 und Ventilfänger 32 sind zwei Dichtungsringe 35 konzentrisch angeordnet. Die Dichtungsringe weisen umlaufende Nuten 39 auf. Die in Richtung der Dichtringe ausgebogenen Federarme greifen mit den Führungszungen in diese Nuten ein. Die Dichtringe werden durch diese Federführung reibungslos axial geführt, radial in ihrer Position fixiert.

Die Lenkerplatte wird durch mehrere über die Lenkerplatte verteilt angeordnete Druckfedern 31, in der Form von Spiralfedern, gegen die Dichtungsringe gepresst. Die Führungszungen 18 greifen in die Nuten der Ventilringe ein und übernehmen die elastische Führung derselben. Eine Führung ist damit in Ventilhubrichtung nachgiebig und reibungslos. Quer zur Hubrichtung ist eine Führung durch die äusseren Federarme und auch die innere Lenkerfeder fest und im wesentlichen unnachgiebig.

Aufgrund der Federkraft der äusseren Federarme wird eine Ventilbewegung zusätzliche gedämpft, so dass eine Kraft, welche auf die Lenkerplatte beim Öffnen des Ventils wirkt, nicht ausschliesslich durch die Druckfedern 31 abgefangen werden muss. Es ist bekannt, dass bekannten Ventilelementen mit Synchronplatten trotz Druckfedern noch sehr hohe Kräfte auf den Fänger wirken. Diese können mit der erfindungsgemässen Lenkerplatte wesentlich verringert werden.

Zusätzlich dazu kann zwischen Lenkerplatte und Ventilfänger 32 eine Dämpfungsplatte 37, z.B. aus einem Kunststoff, eingefügt sein. Diese wird bevorzugt fest am Fänger angebracht. Dadurch wird eine zusätzliche Dämpfung erreicht, ohne dass das sehr einfach aufgebaute und leichte Ventilelement, welches nur aus Lenkerplatte und Dichtungselement besteht, erschwert wird. Es wäre jedoch auch möglich die Dämpfungsplatte beweglich einzubringen.

In **Figur 4** ist das zusammengesetzte Ventil gezeigt. Der Ventilsitz 33 weist mehrere Eintrittskanäle 43 auf, der Ventilfänger 32 mehrere Austrittskanäle 44. Dichtend auf entsprechend konisch angeschrägten Dichtflächen der Eintrittskanäle des Ventilsitzes liegen Dichtringe 35. Darüber angeordnet ist die Lenkerplatte 16 mit den ausgebogenen Federarmen 17, welche in die Nuten der Dichtringe eingreifen. Auf der Lenkerplatte aufliegend sind Druckfedern 31, welche mit ihrem anderen Ende in Federnestern 34 im Ventilfänger 32 angeordnet sind. Ventilinnenseitig auf dem Fänger aufgebracht ist eine Dämpfungsplatte 37, vorzugsweise aufgeklebt, zur zusätzlichen Dämpfung des Ventils.

Das Ventil wird durch eine Zentralschraube 48 und damit zusammenwirkender Mutter 40 und Sicherungsscheibe 49 gehalten. Der maximale Hub des Ventils ist durch Distanzscheiben 47.1, 47.2 gegeben. Diese können separat, aber auch fest mit dem Ventilsitz oder gegebenenfalls auch mit dem Fänger verbunden sein.

Die Lenkerplatte wird mit der inneren Lenkerfeder 19 an einer oder beiden Distanzscheiben festgemacht, vorzugsweise dazwischen geklemmt. Die Lenkerplatte ist somit im Zentralbereich axial und radial fixiert, jedoch axial durch die innere Lenkerfeder ,gelenkt'. Die Lenkerplatte wird bei einem Hub entsprechend nicht vollständig verbogen, sondern über die mögliche Auslenkung der inneren Lenkerfeder axial ausgelenkt.

In einer bevorzugten Ausführungsform ist die Lenkerplatte so am Dichtungsring positioniert, und die äusseren Federarme sowie die Druckfedern derart aufeinander angestimmt sind, dass die Lenkerplatte in einem unbelasteten Zustand, welche einem geschlossenen Ventil entspricht, weder auf den Dichtringen noch am Fänger anliegt. Dies wird vorzugsweise auf 50% des Ventilhubs eingestellt. Eine solche Dämpfungseigenschaft kann aber über eine Abstimmung der Federkonstanten der beiden Federelemente 17, 31 im wesentlichen beliebig eingestellt werden.

Die dreifache Dämpfung des Ventils ist in dieser Figur sehr gut zu sehen. Eine erste Dämpfung erfolgt über die äusseren Federarme 17, eine zweite Dämpfung wird durch die Druckfedern 31 übernommen und eine dritte Dämpfung wird durch die Dämpfungsplatte 37 erreicht. Gleichzeitig erfolgt eine Führung, axial und radial vollständig reibungsfrei durch Federelemente, wobei Führung und Dämpfung nicht nur im Ventilelement, sondern in einer einzigen Platte, der Lenkerplatte, kombiniert sind.

Des weiteren ist in der Figur 4 sehr gut zu sehen, dass im Innenbereich des Ventil keinerlei Vorsprünge in einen Strömungsraum ragen. Diese können eine Strömung negativ beeinflussen, zu erhöhtem Materialabtrag führen, aber auch eine Fertigung und Nachbearbeitung einzelner Ventilteile erschweren oder letzteres gar verunmöglichen.

Das Ausführungsbeispiel ist anhand von jeweils zwei konzentrisch angeordneten Dichtringen und Federarmen gezeigt. In einem Ringventil werden vorzugsweise 1-12, typischerweise 4-20, z.B. 8 Federarme 17 radial nebeneinander angeordnet.

Die verwendeten Materialien sind Metall und Kunststoff, vorzugsweise mit Glas- oder Kohlenfasern verstärkter Kunststoff. Dabei werden für die einzelnen Ventilteile Materialien gewählt, mit welchen sie ihre optimale Funktion erreichen. So wird beispielsweise ein Ventilsitz und Fänger, sowie die Lenkerplatte vorzugsweise aus Metall, die Dichtungsringe eine allfällige Dämpfungsplatte aus Kunststoff gefertigt. Auch andere geeignete Materialien sind denkbar, wie beispielsweise Dichtungsringe aus Keramik. Die einfache Bauweise erlaubt zudem eine einfache Herstellung, wie beispielsweise ein Herstellen einer einstückigen Federplatte.

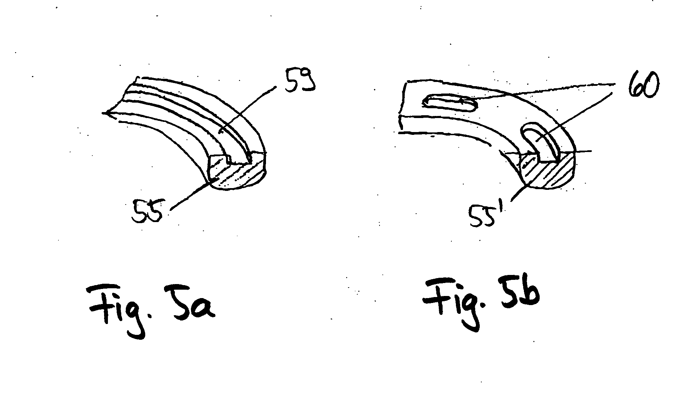

In den **Figuren 5a und 5b** sind mögliche Nutformen für den Eingriff einer bzw. mehrerer Federarme bzw. deren Führungszungen gezeigt. In Figur 5a weist ein Dichtungsring 55 eine im wesentlichen umlaufende Nut 59 auf. In 5b ist die Nut als längliche Ausfräsung 60 ausgebildet, wobei mehrere solcher Ausfräsungen vorzugsweise in regelmässiger Anordnung über den Umfang eines Dichtrings 55' verteilt angeordnet sind. Wird anstelle von Dichtungsringen eine Dichtungsplatte verwendet, sind diese Nuten oder Ausfräsungen entsprechend vorzugsweise regelmässig konzentrisch in der Dichtungsplatte eingebracht. Umlaufende Nuten und Ausfräsungen können auch kombiniert werden, beispielsweise umlaufenden Nuten auf einem inneren kleineren Dichtungsring und Ausfräsungen in den grösseren Dichtungsringen.

Die Nutbreiten sind bevorzugt genau auf entsprechende Federarme bzw. Führungszungen an Federarmen abgestimmt. Eine Nutlänge ist mindestens so gross wie eine radiale Verschiebung der Enden der Federarme bzw. der Führungszungen, welche bei einem Hub des Ventils entsteht.

## Patentansprüche

1. Ringventil aufweisend einen Ventilsitz (33) und einen Ventilfänger (32) und ein zwischen Ventilsitz und Ventilfänger befindliches Ventilelement, **dadurch gekennzeichnet, dass** das Ventilelement ein Dichtungselement mit mindestens einer konzentrisch angeordneten Nut (39,59,60), und eine Lenkerplatte (16) mit mindestens einem aus der Ebene der Lenkerplatte ausgebogenen Federarm (17) aufweist, wobei der mindestens eine Federarm mit der konzentrisch angeordneten Nut zusammenwirkt und das Dichtungselement **dadurch** reibungsfrei geführt ist.

2. Ventil nach Anspruch 1, wobei ein Dichtungselement über ein in die Nut (39,59,60) eingreifendes, als Führungszunge (18) ausgebildetes äusseres Ende des Federarms (17) geführt ist.

3. Ventil nach Anspruch 1 oder 2, wobei das Dichtungselement aus mehreren konzentrischen Dichtringen (35,55,55') mit einer oder mehreren darin eingebrachten Nuten (39,59,60) besteht oder eine Dichtungsplatte mit mehreren in radialer und Umfangsrichtung konzentrisch angeordneten Durchgangsöffnungen (43) und Nuten (39,59,60) ist.

4. Ventil nach einem der Ansprüche 1-3, wobei die Lenkerplatte (16) mehrere radial und in Umfangsrichtung konzentrisch angeordnete, ausgebogene Federarme (17) aufweist.

5. Ventil nach einem der Ansprüche 1-4, wobei der oder die ausgebogenen Federarme (17) nur in einem äusseren Bereich der Lenkerplatte (16) angeordnet sind.

6. Ventil nach einem der Ansprüche 1-5, wobei der zentrale innere Bereich der Lenkerplatte (16) eine nicht ausgebogene innere Lenkerfeder (19) aufweist.

7. Ventil nach Anspruch 6, wobei die innere Lenkerfeder (19) durch eine spiralförmige Aussparung um eine mittige Zentralöffnung des Ventils herum gebildet ist.

8. Ventil nach Anspruch 6 oder 7, wobei die innere Lenkerfeder (19) in einem zentralsten innersten Bereich fixiert ist, derart, dass eine axiale Auslenkung der Lenkerplatte (16) im zentralen inneren Bereich über die innere Lenkerfeder geschieht.

9. Ventil nach einem der Ansprüche 1-8, wobei zwischen Lenkerplatte (16) und Fänger (32) mehrere zylindrische Druckfedern (31) und eine Dämpfungsplatte (37) angeordnet ist.

10. Ventil nach Anspruch 9, wobei die Dämpfungsplatte (37) fest mit dem Fänger (32) verbunden ist.

11. Ventil nach einem der Ansprüche 1-10, wobei das Ventilelement nur aus Dichtelement und Lenkerplatte (16) gebildet ist.

12. Ventil nach einem der vorangehenden Ansprüche, wobei bis auf den mindestens einen Federarm (17) der Lenkerplatte (16) keine Vorsprünge oder Ausformungen in einen inneren Strömungskanal des Ventils (1) ragen.

13. Kolbenkompressor mit einem Ringventil gemäss einem der Ansprüche 1-12.

14. Lenkerplatte (16) zur Verwendung in einem Ringventil (1) nach einem der Ansprüche 1-12, aufweisend mehrere radial und in Umfangsrichtung konzentrisch angeordnete und aus der Ebene der Lenkerplatte ausgebogene Federarme (17), sowie eine im inneren zentralen Bereich der Lenkerplatte eine innere Lenkerfeder (19) zum Befestigen und axialen Auslenken der Lenkerplatte.

15. Verfahren zum reibungsfreien Führen und gleichzeitigen Dämpfen eines Ringventils (1), **dadurch gekennzeichnet, dass** mindestens ein in eine Hubrichtung des Ringventils ausgebogener Federarm (17) in eine Nut (39,59,60) in einem Dichtelement eingreift, wobei **dadurch** bei einer Hubbewegung des Ventils (1) das Dichtelement axial reibungsfrei geführt wird und das Ventil gleichzeitig durch eine im mindestens einen Federarm (17) gespeicherte Federkraft in Hubrichtung gedämpft wird.
